# EUROPEAN PATENT SPECIFICATION

(11) **EP 2 476 879 B1**
(45) Date of publication and mention of the grant of the patent: **23.04.2014**
(21) Application number: 11151098.8
(22) Date of filing: 17.01.2011
(51) Int. Cl.: F02B 75/02, F02B 41/04, F02B 47/02, F01N 5/02, F01N 13/04

(54) **Six stroke engine**
Sechstaktmotor
Moteur à six temps

(43) Date of publication of application: 18.07.2012
(73) Proprietor: Volvo Car Corporation, 405 31 Göteborg (SE)
(72) Inventor: Eriksson, Sören, 44290, Kungälv (SE)
(74) Representative: Kraenzmer, Martin

(56) References cited:
- DE-A1-102004 013 854
- US-A- 1 339 176
- US-A- 4 143 518
- US-A- 4 552 106

## Description

### TECHNICAL FIELD

The present invention relates to a six stroke internal combustion engine. Moreover, the present invention relates to a method for obtaining motive power from a six stroke internal combustion engine. Further, the present invention relates to the use of use of a combustion product portion of combustion products.

### BACKGROUND OF THE INVENTION

Internal combustion engines, such as vehicle combustion engines, are traditionally two or four stroke internal combustion engines.

However, in order to increase the efficiency of the internal combustion engines, six stroke internal combustion engines have recently been developed.

An example of such a six stroke internal combustion engine is disclosed in WO 2010/030864 or US 4,143,518. '864 discloses an internal combustion engine which is adapted to perform a fifth stroke of steam introduction and expansion and a sixth stroke of steam evacuation subsequent to the four strokes of a traditional four stroke engine.

In order to increase the temperature of the steam introduced during the fifth stroke, '864 proposes that a heat exchanger is provided in an exhaust gas manifold of the engine and through which heat exchanger the steam is conducted before it is introduced into the combustion chamber of the engine. However, the above solution adds a plurality of further components to e.g. the exhaust manifold of the engine and such components may for instance impair the flow of the exhaust gases from the combustion chamber.

### SUMMARY OF THE INVENTION

One object of the invention is to reduce or ameliorate at least one of the disadvantages of the prior art systems and/or methods, or to provide a useful alternative.

This object is achieved by a six stroke internal combustion engine according to claim 1.

As such, the present invention relates a six stroke internal combustion engine comprising a combustion chamber and a piston. The engine is adapted to perform the following subsequent strokes:
- an intake stroke, introducing a first fluid into the combustion chamber;
- a compression stroke, compressing the first fluid;
- a power stroke, igniting a combustible fluid mixture comprising the first fluid to thereby cause a combustion producing combustion products;
- a first exhaust stroke, evacuating at least a portion of the combustion products, the first exhaust stroke being performed such that a predetermined combustion product portion of the combustion products intended to be evacuated by a piston movement is retained in the combustion chamber after the first exhaust stroke has been completed;
- a fluid expansion stroke, introducing and expanding a second fluid in the combustion chamber resulting in second fluid products, and
- a second exhaust stroke, evacuating the second fluid products.

With a six stroke internal combustion engine according to the present invention, at least some of the heat generated in the combustion products is used directly in the combustion chamber to thereby increase the heat, and thus the expansion, of the second fluid introduced in the combustion chamber during the fluid expansion stroke of the engine. As such, in addition to make use of the heating of e.g. the wall or walls of the combustion chamber during the power stroke of the engine, the second fluid is heated further by the predetermined combustion product portion intended to be evacuated by a piston movement which in turn results in an increased expansion of the second fluid. The increased expansion of the second fluid may result in an increased effect of the fluid expansion stroke which consequently may increase the efficiency of the engine.

According to the present invention, the predetermined combustion product portion may be within the range of 1 - 100%, preferably within the range of 10 - 70 %, of the combustion products.

It has been found that predetermined combustion product portions evacuated by a piston movement within the above ranges results in an appropriate increase of the heating of the second fluid while still providing an appropriate exhaust of combustion products during the first exhaust stroke.

As used herein the percentage of the predetermined combustion product portion evacuated by a piston movement is defined as being equal to the percentage of the volume of the combustion chamber when the first exhaust stroke has been completed. To this end, the volume of the combustion chamber when the piston is in a top dead centre is herein defined as being 0% whereas the volume of the combustion chamber when the piston is in a bottom dead center is herein defined as being 100%.

As such, assuming that the combustion chamber has a constant cross-section area, when the piston is located half-way up between bottom dead center and top dead center when a first exhaust stroke is completed, the predetermined combustion product portion intended to be evacuated by a piston movement is 50% of the combustion products intended to be evacuated by a piston movement.

According to the present invention, the engine further comprises: a first exhaust conduit adapted to selectively communicate with the combustion chamber to thereby evacuate combustion products from the combustion chamber and a second exhaust conduit adapted to selectively communicate with the combustion chamber to thereby evacuate second fluid products from the combustion chamber, the engine may further comprise a catalytic converter comprising a first and a second catalytic converter inlet: the first catalytic converter inlet being in fluid communication with the first exhaust conduit and the second catalytic converter inlet being in fluid communication with the second exhaust conduit.

Since the six stroke internal combustion engine discharges combustion products during two strokes, namely the first and second exhaust strokes, it is desired to feed the products of both these strokes towards an exhaust after treatment assembly which includes a catalytic converter. However, since the first and second exhaust strokes may result in different pressures and flow rates of the discharged products, it may be advantageous to provide the catalytic converter with separate inlets.

According to the present invention, the second catalytic converter inlet and the second exhaust conduit are in fluid communication with one another via a condenser.

The provision of a condenser between the second catalytic converter inlet and the second exhaust conduit is advantageous since it implies that the portion of the second fluid products which is liquid is extracted from the second fluid products before the remaining components are fed to the catalytic converter. The liquid portion of the second fluid products are used again in the subsequent fifth and sixth strokes of the engine.

According to the present invention, the catalytic converter comprises a first catalytic converter chamber and a second catalytic converter chamber, the first catalytic converter chamber being delimited from the second catalytic converter chamber, the first catalytic converter chamber being in fluid communication with the first catalytic converter inlet and the second catalytic converter chamber being in fluid communication with the second catalytic converter inlet.

According to the present invention, the first catalytic converter chamber and the second catalytic converter chamber are in thermal communication with one another.

According to the present invention, the first catalytic converter chamber may be delimited from the second catalytic converter chamber by a delimitation member of a first material and the first and second catalytic converter members are enclosed by an enclosing member of a second material, the first material having a higher thermal conductivity than the second material.

A second aspect of the present invention (not claimed) relates to a method for obtaining motive power from a six stroke internal combustion engine, the engine comprises a combustion chamber and a piston, the method comprises the steps of:
- introducing a first fluid into the combustion chamber;
- compressing the first fluid;
- igniting a combustible fluid mixture comprising the first fluid to thereby cause a combustion in the combustion chamber;
- evacuating combustion products from the combustion such that a predetermined combustion product portion of the combustion products intended to be evacuated by a piston movement is retained in the combustion chamber;
- expanding a second fluid in the combustion chamber, and
- evacuating second fluid products of the expansion of the second fluid.

According to the second aspect of the present invention (not claimed), the predetermined combustion product portion evacuated by a piston movement may be within the range of 1 - 100%, preferably within the range of 10 - 70 %, of the combustion products.

A third aspect of the present invention (not claimed) relates to the use of a combustion product portion of combustion products evacuated by a piston movement which is retained in a combustion chamber of a six stroke internal combustion engine for heating a second fluid which is introduced into the combustion chamber in a fluid expansion stroke. The combustion products are obtained during a power stroke of the six stroke internal combustion engine and the combustion product portion is retained in the combustion chamber after the completion of a first exhaust stroke of the engine. The fluid expansion stroke is performed subsequent to the first exhaust stroke.

### BRIEF DESCRIPTION OF THE DRAWINGS

The present invention will hereinafter be explained in greater detail by means of nonlimiting examples and with reference to the appended drawings in which:
- Fig. 1: is a schematic illustration of an embodiment of a six stroke internal combustion engine in accordance with the present invention;
- Fig. 2a: is a schematic illustration of a cylinder assembly the Fig. 1 engine during an intake stroke;
- Fig. 2b: is a schematic illustration of the Fig. 2a cylinder assembly during a compression stroke;
- Fig. 2c: is a schematic illustration of the Fig. 2a cylinder assembly during a power stroke;
- Fig. 2d: is a schematic illustration of the Fig. 2a cylinder assembly during a first exhaust stroke;
- Fig. 2e: is a schematic illustration of the Fig. 2a cylinder assembly during a fluid expansion stroke;
- Fig. 2f: is a schematic illustration of the Fig. 2a cylinder assembly during a second exhaust stroke, and
- Fig. 3: is a time diagram of exhaust heat in a combustion chamber 20.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

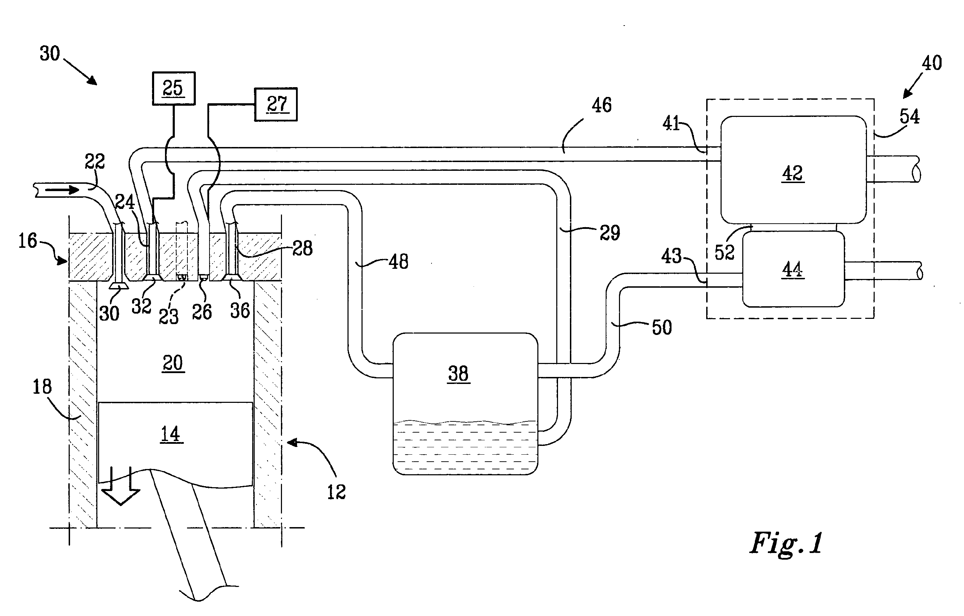

Fig. 1 illustrates an embodiment of a six stroke internal combustion engine 10 according to the present invention. The engine 10 comprises a cylinder assembly 12 which in turn comprises a piston 14, a cylinder head 16 and a cylinder wall 18. The cylinder assembly 12 further comprises a combustion chamber 20 which is at least partially defined by the piston 14, the cylinder head 16 and the cylinder wall 18. Although embodiments of the engine 10 of the present invention may include only one cylinder assembly 12, a six stroke internal combustion engine 10 according to the present invention generally comprises a plurality of cylinder assemblies (not shown).

As may be realized from the above, as used herein, the expression "combustion chamber" relates to the volume which is at least partially defined by the piston 14, the cylinder head 16 and the cylinder wall 18. The combustion chamber 20 volume may change depending on the position of the piston 14 in relation to the cylinder head 16.

The engine 10 according to the present invention is suitable for being used in vehicles, such as cars, lorries, buses, etcetera. However, the engine 10 may also be used in other applications. Purely by way of example, an engine 10 according to the present invention may be used in a compressor or a generator for instance.

As may be gleaned from Fig. 1, the cylinder head 16 comprises a plurality of conduits, viz a first fluid inlet conduit 22, an exhaust conduit 24 and a second fluid products outlet conduit 28. The cylinder head also comprises a second fluid inlet injector 26. However, in other embodiments of the present invention, the cylinder may comprise more or fewer conduits and/or injectors.

At least one valve is preferably associated with each one of the above conduits. The implementation of the cylinder assembly 12 illustrated in Fig. 1 comprises three valves: a first fluid inlet valve 30, an exhaust valve 32 and a second fluid products outlet valve 36. However, it should be noted that other implementations of the cylinder assembly 12 may comprise more or fewer valves.

The first fluid inlet conduit 22 is preferably connected to a source of a combustible fluid mixture such as an injection timing device (not shown) which in turn is in fluid communication with a source of a combustible fluid (not shown), such as tank for gasoline, diesel or ethanol for instance.

Optionally, the first fluid inlet conduit 22 may be connected to a source of a first fluid which is not the main combustible fluid during the power stroke of the engine 10. Purely by way of example, the first fluid may be air. In such an implementation of the cylinder assembly 12, the assembly 12 is preferably provided with a combustible fluid injector 23 which is adapted to inject combustible fluid into the combustion chamber 20 during the power stroke.

In a similar vein, the second fluid inlet injector 26 may be in fluid communication with a source of the second fluid. Purely be way of example, the second fluid may comprise water and/or water vapour which may be stored in a vessel in fluid communication with the second fluid inlet injector 26. In the embodiment of the engine 10 illustrated in Fig. 1, the second fluid inlet injector 26 is in fluid communication with a condenser 38 via a second fluid inlet conduit 29. The condenser 38 is turn is in fluid communication with the second fluid products outlet conduit 28.

The condenser 38 and/or the fluid inlet conduit 29 may in some embodiments of the present invention be supplied with a second fluid, such as water, from a second fluid producing unit of the engine 10 or e.g. a vehicle (not shown) hosting the engine. If the second fluid is water, examples of water producing units may be an exhaust treatment system (not shown) or an air-conditioning system (not shown).

Moreover, the condenser 38 may comprise a heat exchanger (not shown) for providing heat to additional systems. As such, if the engine 10 forms part of a vehicle, the heat exchanger may be included in an interior heater for instance.

The Fig. 1 internal combustion engine 10 further comprises a catalytic converter assembly 40 which in turn comprises a first catalytic converter 42 and a second catalytic converter 44 as will be discussed further hereinbelow.

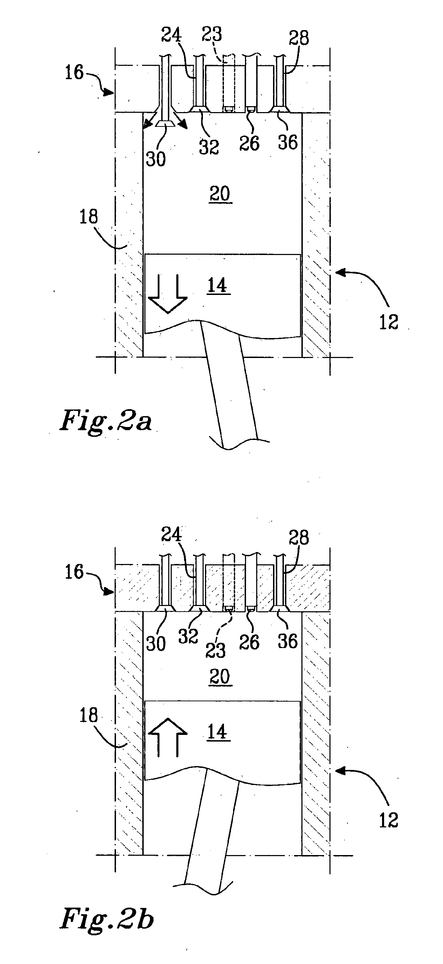

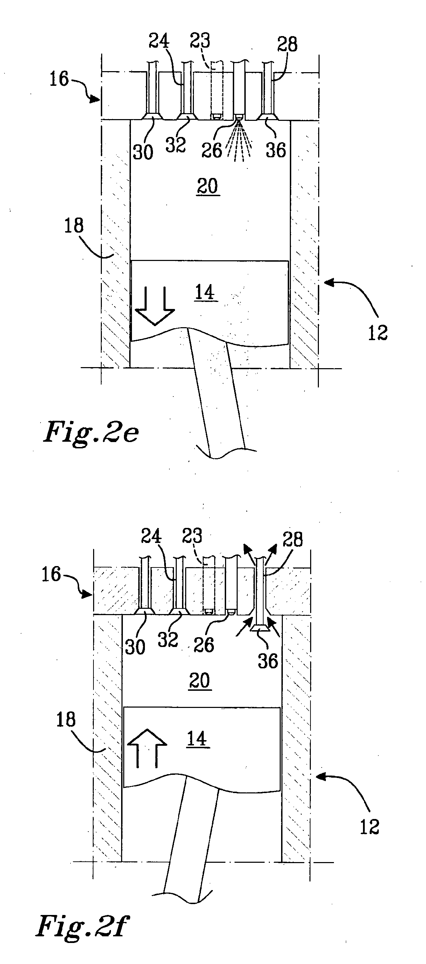

The function of the cylinder assembly 12 of the engine 10 during the six strokes is presented with reference to Fig. 2a to Fig. 2f hereinbelow.

Fig. 2a illustrates the cylinder assembly 12 during an intake stroke. As may be gleaned from Fig 2a, the first fluid inlet valve 30 is in an open position, i.e. a position such that fluid communication is allowed between the fluid mixture inlet conduit 22 and the combustion chamber 20, whereas the remaining valves 32, 36 are in a closed position such that no fluid communication is provided between the combustion chamber 20 and the exhaust conduit 24 and the second fluid products outlet conduit 28, respectively. During the intake stroke, a first fluid is introduced into the combustion chamber 20 which introduction is indicated by the solid arrows in Fig. 2a. During the intake stroke, the piston is imparted a displacement away from the cylinder head 16 such that the volume of the combustion chamber 20 increases.

As has previously been discussed, the first fluid may comprise any kind of fluid which is suitable for use in an internal combustion engine. Purely by way of example, the first fluid may comprise one or a combination of any one of the following liquids: gasoline, diesel or an alcohol such as methanol and/or ethanol. Instead of, or in addition to, the above discussed liquids, the first fluid may comprise natural gas, such as methane.

Optionally, should the cylinder assembly 12 be equipped with a combustible fluid injector 23, the first fluid may be air for instance.

Fig. 2b illustrates the cylinder assembly 12 during a compression stroke. During the compression stroke, all the valves 30, 32, 36 are closed and the piston 14 is imparted a displacement towards the cylinder head 16 such that the volume of the combustion chamber 20 decreases which thereby increases the pressure of the first fluid.

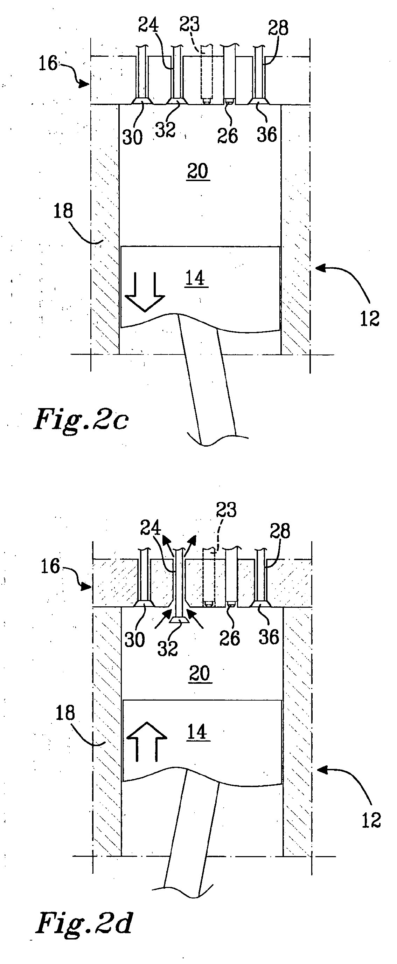

Fig. 2c illustrates the cylinder assembly 12 during a power stroke. If the cylinder assembly comprises a combustible fluid injector 23, the combustible fluid injector 23 is actuated such that combustible fluid is introduced into the combustion chamber 20 and is subsequently mixed with the first fluid.

Optionally, in other embodiments of the engine 10 of the present invention, a combustible fluid injector 23 may be used to introduce combustible fluid into the combustion chamber 20 during the intake stroke and/or compression stroke.

As such, irrespective of whether the combustible fluid was introduced as a portion of the first fluid during the intake stroke or if it was added to the first fluid during e.g. the power stroke, a combustible fluid mixture has been obtained in the combustion chamber 20. Then, during the power stroke, the combustible fluid mixture is ignited which thereby causes a combustion which forces the piston 14 away from the cylinder head 16.

Moreover, the combustion causes a production of combustion products. As may be realized from Fig. 2c, all the valves 30, 32, 34, 36 are closed during the power stroke. The above ignition may be induced by the compression of the mixture, should the mixture for instance comprise a self-combusting component such as diesel, or the ignition may be initiated by a spark - for instance by means of a spark plug (not shown) - should the mixture for instance comprise gasoline or an alcohol.

Fig. 2d illustrates the cylinder assembly 12 during a first exhaust stroke, evacuating at least a portion of the combustion products from the combustion chamber 20 as indicated by the arrows in Fig. 2d. During the first exhaust stroke, the exhaust valve 32 is open whereas the other valves 30, 36 are closed.

Since the combustion of the combustible fluid mixture results in an excess pressure in the combustion chamber 20 even when the piston 14 is in or close to it's bottom dead center, a portion of the combustion products is evacuated from the combustion chamber via the exhaust conduit 24 before the piston 14 starts moving towards the cylinder head 16.

The part of the combustion products evacuated due to the excess pressure in the combustion chamber 20 is hereinafter referred to as the excess pressure combustion products.

However, as a second step of the first exhaust stroke, the piston 14 moves towards the cylinder head 16 such that the volume of the combustion chamber 20 decreases and at least some of the remaining combustion products may be forced out of the combustion chamber 20. In other words, the remaining combustion products are evacuated by a piston 14 movement.

However, according to the present invention, the first exhaust stroke is performed such that a predetermined combustion product portion of the combustion products intended to be evacuated by a piston 14 movement is retained in the combustion chamber 20 after the first exhaust stroke has been completed. As the expression is used herein, the first exhaust stroke has been completed when the condition of the exhaust valve 32 has been changed from an open position to a closed position.

As such, the exhaust valve 32 closes before the piston 14 reaches its top dead centre such that a predetermined portion of the combustion product is retained in the combustion chamber 20 after the completion of the power stroke.

Preferably, the exhaust valve 32 is operated such that a portion within the range of 1 - 100%, preferably within the range of 10 - 70 %, of the combustion products is retained in the combustion chamber 20 after the completion of the power stroke.

If the exhaust valve 32 is closed when the piston 14 is in the bottom dead center, 100% of the combustion products evacuated by a piston 14 movement is retained in the combustion chamber 20 and only the excess pressure combustion products will be evacuated from the combustion chamber 20.

As may be realized by a person skilled in the art, obtaining a retention of the combustion products within the above discussed ranges may require a thorough timing of the opening and closing of the exhaust valve 32.

Such a thorough control of the exhaust valve 32 may for instance be obtained by using the MultiAirⓇ system by Fiat which closes the exhaust valve 32 by collapsing a hydraulic pressure at a specific angle of the valve.

Optionally, or in addition to the MultiAirⓇ system, the exhaust valve 32 may be operated by a camshaft with one opening lobe and one closing lobe, the opening and closing lobes being separately controllable.

The exhaust valve 32 may be operated by an exhaust valve control system 25 (see Fig. 1). The exhaust valve control system 25 may be arranged to determine an appropriate value of the retained combustion product portion in order to increase - and preferably optimize - the efficiency of the internal combustion engine 10.

To this end, the exhaust valve control system 25 may use a control method using at least one of the following parameters as an input: the engine speed, the engine load, the engine heat or transients and/or gradients of these parameters. As such, the exhaust valve control system 25 is preferably in communication with one or more sensors (not shown) adapted to determine at least one of the above parameters.

Fig. 2e illustrates the cylinder assembly 12 during a second fluid expansion stroke. During the second fluid expansion stroke, the second fluid injector is actuated such that a second fluid may be fed to the combustion chamber 20. The second fluid may be any kind of fluid with appropriate heat expansion characteristics. Purely by way of example, the second fluid may comprise water and/or water vapour. Preferably, at least a portion of the second fluid is in a liquid form when introduced into the combustion chamber 20. More preferred, all of the second fluid is in a liquid form when introduced into the combustion chamber 20.

In a similar vein as for the exhaust valve 32, the second fluid inlet injector 26 may preferably be connected to a second fluid inlet injector control system 27 controlling the operation of the second fluid inlet injector 26. The second fluid inlet injector control system 27 may use a control method using at least one of the following parameters as an input: the engine speed, the engine load, the engine heat or transients and/or gradients of these parameters and may thus be connected to not shown sensors for estimating any one of the above parameters.

When an appropriate amount of the second fluid has been introduced into the combustion chamber, the second fluid is heated and consequently expands, which expansion forces the piston 14 away from the cylinder head 16. The second fluid is heated by the heat in the delimiting members of the combustion chambers 20, such as the piston 14, the cylinder head 16 and the cylinder wall 18, as well as the heat of the combustion product portion which is retained in the combustion chamber 20 after the completion of the exhaust stroke. As may be realized by a person skilled in the art, forcing the cylinder 14 away from the cylinder head 16 will result in an additional motive power production for the engine 10.

Fig. 2e illustrates the cylinder assembly 12 during a second exhaust stroke. As may be gleaned from Fig. 2e, the second fluid products outlet valve 36 is open during the second exhaust stroke such that second fluid products - comprising the second fluid as well as the combustion product portion - are forced out of the combustion chamber 20 by the movement of the piton 14 towards the piston head 16.

After the completion of the second exhaust stroke illustrated in Fig. 2e, the cylinder assembly 12 is prepared for a new stroke cycle, commencing with the intake stroke of Fig. 2a.

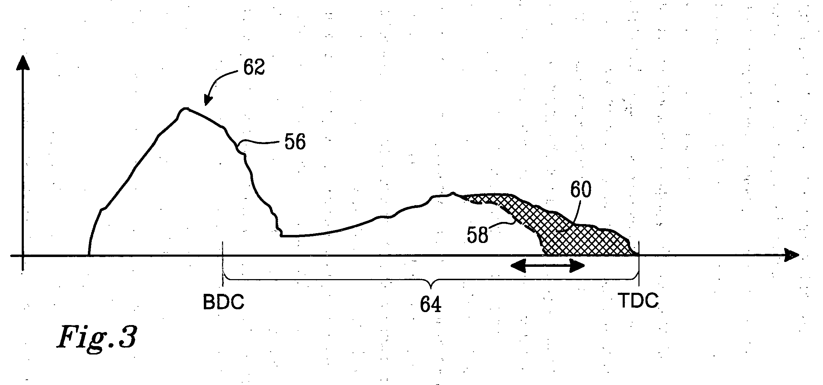

Fig. 3 illustrates the discharged exhaust heat from the combustion chamber 20 as a function of time between the bottom dead centre and the top dead centre during the first exhaust stroke. In Fig. 3, the solid line 56 illustrates the discharged exhaust heat from the combustion chamber for a prior art first exhaust stroke whereas the dotted line 58 illustrates the discharged exhaust heat for a first exhaust stroke as proposed by the present invention. As may be gleaned from Fig. 3, the time instance at which the exhaust valve 32 is closed may varied, for instance based on at least one of the previously discussed parameters.

As previously been discussed, when the piston 14 is at or close to bottom dead center, excess pressure combustion products will be evacuated from the combustion chamber 20 and this phenomenon is indicated by a hump 62 in Fig. 3. However, as the piston 14 moves from bottom dead center towards top dead center, at least some of the remaining combustion products are forced out of the combustion chamber 20. The piston's 14 movement from the bottom dead center to the top dead center is illustrated by range 64 in Fig. 3.

As may be realized from Fig. 3, the first exhaust stroke according to the present invention will result in an amount of the exhaust heat being retained in the combustion chamber 20 as compared to the prior art first exhaust stroke. The heat retained in the combustion chamber is illustrated by the heat area 60 in Fig. 3. As previously discussed, the heat thus retained may be used in the subsequent fluid expansion stroke.

As may be realized by a person skilled in the art, since the second exhaust stroke discharges the second fluid as well as a combustion product portion, it is generally desired to guide at least the combustion product portion through a catalytic converter.

As such, with reference to Fig. 1 again, the engine 10 of the present invention preferably comprises a catalytic converter assembly 40 which in turn comprises a first catalytic converter inlet 41 and a second catalytic converter inlet 43. As may be gleaned from Fig. 1, the first catalytic converter inlet 41 inlet is in fluid communication with the first exhaust conduit 24. In the embodiment of the engine 10 illustrated in Fig. 1, the above fluid communication is obtained by means of a first exhaust conduit 46. Moreover, the second catalytic converter inlet 43 is in fluid communication with the second exhaust conduit 28. In the embodiment of the engine 10 illustrated in Fig. 1, the above fluid communication is obtained via a second 48 and third 50 conduit, each one of which being in fluid communication with the condenser 38.

The catalytic converter assembly 40 may comprise one common catalytic converter chamber (not shown) in fluid communication with the first and second catalytic converter inlets 41, 43. However, Fig. 1 illustrates a preferred embodiment of the present invention wherein the catalytic converter assembly 40 comprises a first catalytic converter chamber 42 and a second catalytic converter chamber 44. As may be gleaned from Fig. 1, the first catalytic converter chamber 42 is in fluid communication with the first catalytic converter inlet 41 and the second catalytic converter chamber 44 is in fluid communication with the second catalytic converter inlet 43.

Each one of the first and second fluid chambers 42, 44 are in fluid connection with a corresponding outlet. The outlets may be connected to one another to a common exhaust manifold or each one of the outlets may be in fluid communication with an individual exhaust manifold.

Preferably, the first catalytic converter chamber 42 and the second catalytic converter chamber 44 are in thermal communication with one another. The thermal communication may be obtained in a plurality of ways. However, in a preferred implementation of the catalytic converter assembly 40, the first catalytic converter chamber 42 is delimited from the second catalytic converter chamber 44 by a delimitation member 52 of a first material. The first and second catalytic converter members are enclosed by an enclosing member 54 - which may be an insulating member - of a second material and the first material has a higher thermal conductivity than the second material.

Purely by way of example, the delimitation member 52 may comprise a metal panel, e.g. a copper panel or steel panel. In other implementations of the catalytic converter assembly 40, the delimitation member 52 may comprise a panel of a ceramic material. The second member as discussed above may for instance be an insulating member. Preferably, the delimitation member 52 provides a metallic thermal conduction between the two chambers 42, 44.

The purpose of the thermal communication between the first and second catalytic converter chambers 42, 44 is to transfer excess heat from the first catalytic converter chamber 42 to the second catalytic converter chamber 44 since the combustion products entering the first catalytic converter chamber 42 will generally have a higher temperature and volume as compared to the portions of the second fluid products entering the second catalytic converter chamber 44. As such, since a catalytic converter generally requires a certain minimum temperature in order to function properly, it may be desired to heat the second catalytic converter chamber 44 to a temperature above the maximum temperature obtainable by the flow of fluids through the second catalytic converter chamber 44 alone.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A six stroke internal combustion engine (10) comprising a combustion chamber (20) and a piston (14), said engine (10) being adapted to perform the following subsequent strokes:
- an intake stroke, introducing a first fluid into said combustion chamber (20);
- a compression stroke, compressing said first fluid;
- a power stroke, igniting a combustible fluid mixture comprising said first fluid to thereby cause a combustion producing combustion products;
- a first exhaust stroke, evacuating at least a portion of said combustion products, said first exhaust stroke being performed such that a predetermined combustion product portion of said combustion products intended to be evacuated by a piston movement is retained in said combustion chamber (20) after said first exhaust stroke has been completed;
- a fluid expansion stroke, introducing and expanding a second fluid in said combustion chamber (20) resulting in second fluid products, and
a second exhaust stroke, evacuating said second fluid products,
wherein said engine (10) further comprises: a first exhaust conduit (24) adapted to selectively communicate with said combustion chamber (20) to thereby evacuate said combustion products from said combustion chamber (20) and a second exhaust conduit (28) adapted to selectively communicate with said combustion chamber (20) to thereby evacuate said second fluid products from said combustion chamber (20), **characterised in that** said engine (10) further comprising a catalytic converter (40) comprising a first (41) and a second (43) catalytic converter inlet: said first catalytic converter inlet (41) being in fluid communication with said first exhaust conduit (24) and said second catalytic converter inlet (43) being in fluid communication with said second exhaust conduit (28), wherein said second catalytic converter inlet (43) and said second exhaust conduit (28) are in fluid communication with one another via a condenser (38), wherein said catalytic converter (40) comprises a first catalytic converter chamber (42) and a second catalytic converter chamber (44), said first catalytic converter chamber (42) being delimited from said second catalytic converter chamber (44), said first catalytic converter chamber (42) being in fluid communication with said first catalytic converter inlet (41) and said second catalytic converter chamber (44) being in fluid communication with said second catalytic converter inlet (43), wherein said first catalytic converter chamber (42) and said second catalytic converter chamber (44) are in thermal communication with one another.

2. The six stroke internal combustion engine (10) according to claim 1, wherein said predetermined combustion product portion is within the range of 1 - 100%, preferably within the range of 10 - 70 %, of said combustion products.

3. The six stroke internal combustion engine (10) according to claim 1 or 2, wherein said first catalytic converter chamber (42) is delimited from said second catalytic converter chamber (44) by a delimitation member (52) of a first material, and said first and second catalytic converter members (42, 44) are enclosed by an enclosing member (54) of a second material, said first material having a higher thermal conductivity than said second material.

## Patentansprüche

1. Sechstakt-Brennkraftmaschine (10), welche einen Brennraum (20) und einen Kolben (14) aufweist, wobei die Brennkraftmaschine (10) dazu eingerichtet ist, die folgenden aufeinander folgenden Takte auszuführen:
- einen Ansaugtakt, der ein erstes Fluid in den Brennraum (20) einführt;
- einen Verdichtungstakt, der das erste Fluid verdichtet;
- einen Arbeitstakt, der ein das erste Fluid enthaltendes Fluidgemisch zündet, um dadurch eine Verbrennung zu verursachen, die Verbrennungsprodukte erzeugt;
- einen ersten Ausstoßtakt, der wenigstens einen Teil der Verbrennungsprodukte ausstößt, wobei der erste Ausstoßtakt derart ausgeführt wird, dass ein vorbestimmter Verbrennungsprodukte-Anteil von den Verbrennungsprodukten, die durch eine Kolbenbewegung ausgestoßen werden sollen, in dem Brennraum (20) zurückbehalten wird, nachdem der erste Ausstoßtakt beendet worden ist;
- einen Fluidexpansionstakt, der ein zweites Fluid in den Brennraum (20) einführt und expandiert, was zweite Fluidprodukte zur Folge hat; und
- einen zweiten Ausstoßtakt, der die zweiten Fluidprodukte ausstößt,
wobei die Brennkraftmaschine (10) ferner aufweist:
eine erste Abgasleitung (24), die dazu eingerichtet ist, selektiv mit dem Brennraum (20) zu kommunizieren, um dadurch die Verbrennungsprodukte aus dem Brennraum (20) abzuführen, und eine zweite Abgasleitung (28), die dazu eingerichtet ist, selektiv mit dem Brennraum (20) zu kommunizieren, um dadurch die zweiten Fluidprodukte aus dem Brennraum (20) abzuführen,
**dadurch gekennzeichnet, dass** die Brennkraftmaschine (10) ferner einen Katalysator (40) aufweist, der einen ersten (41) und einen zweiten (43) Katalysatoreinlass aufweist, wobei der erste Katalysatoreinlass (41) mit der ersten Abgasleitung (24) in Fluidverbindung steht und der zweite Katalysatoreinlass (43) mit der zweiten Abgasleitung (28) in Fluidverbindung steht, wobei der zweite Katalysatoreinlass (43) und die zweite Abgasleitung (28) über einen Kondensator (38) miteinander in Fluidverbindung stehen, wobei der Katalysator (40) eine erste Katalysatorkammer (42) und eine zweite Katalysatorkammer (44) aufweist, wobei die erste Katalysatorkammer (42) von der zweiten Katalysatorkammer (44) abgegrenzt ist, wobei die erste Katalysatorkammer (42) in Fluidverbindung mit dem ersten Katalysatoreinlass (41) steht und die zweite Katalysatorkammer (44) in Fluidverbindung mit dem zweiten Katalysatoreinlass (43) steht, wobei die erste Katalysatorkammer (42) und die zweite Katalysatorkammer (44) in thermischer Verbindung miteinander stehen.

2. Sechstakt-Brennkraftmaschine (10) nach Anspruch 1, wobei der vorbestimmte Verbrennungsprodukte-Anteil innerhalb des Bereichs von 1 - 100 %, vorzugsweise innerhalb des Bereichs von 10 - 70 % der Verbrennungsprodukte liegt.

3. Sechstakt-Brennkraftmaschine (10) nach Anspruch 1 oder 2, wobei die erste Katalysatorkammer (42) von der zweiten Katalysatorkammer (44) durch ein Abgrenzungselement (52) aus einem ersten Material abgegrenzt ist, und das erste und das zweite Katalysatorkammer (42, 44) von einem Umschließungselement (54) aus einem zweiten Material umschlossen sind, wobei das erste Material eine höhere Wärmeleitfähigkeit als das zweite Material aufweist.

## Revendications

1. Moteur à combustion interne à six temps (10) comprenant une chambre de combustion (20) et un piston (14), ledit moteur (10) étant conçu pour accomplir les temps successifs suivants :
- un temps d'admission, introduisant un premier fluide dans ladite chambre de combustion (20) ;
- un temps de compression, comprimant ledit premier fluide ;
- un temps moteur, allumant un mélange fluide combustible comprenant ledit premier fluide pour ainsi entraîner une combustion produisant des produits de combustion ;
- un premier temps d'échappement, évacuant au moins une partie desdits produits de combustion, ledit premier temps d'échappement étant accompli de telle manière qu'une partie de produits de combustion prédéterminée desdits produits de combustion destinée à être évacuée par un mouvement du piston soit retenue dans ladite chambre de combustion (20) une fois que ledit premier temps d'échappement a été accompli ;
- un temps de détente du fluide, introduisant et détendant un second fluide dans ladite chambre de combustion (20), donnant lieu à des seconds produits fluides, et
- un second temps d'échappement, évacuant lesdits seconds produits fluides,
ledit moteur (10) comprenant en outre : un premier conduit d'échappement (24) conçu pour communiquer de manière sélective avec ladite chambre de combustion (20) afin d'évacuer lesdits produits de combustion de ladite chambre de combustion (20) et un second conduit d'échappement (28) conçu pour communiquer de manière sélective avec ladite chambre de combustion (20) afin d'évacuer lesdits seconds produits fluides de ladite chambre de combustion (20), **caractérisé en ce que** ledit moteur (10) comprend en outre un catalyseur (40) comprenant une première (41) et une seconde (43) entrée de catalyseur : ladite première entrée (41) de catalyseur étant en communication fluidique avec ledit premier conduit d'échappement (24) et ladite seconde entrée (43) de catalyseur étant en communication fluidique avec ledit second conduit d'échappement (28), ladite seconde entrée (43) de catalyseur et ledit second conduit d'échappement (28) étant en communication fluidique l'un avec l'autre par le biais d'un condenseur (38), ledit catalyseur (40) comprenant une première chambre (42) de catalyseur et une seconde chambre (44) de catalyseur, ladite première chambre (42) de catalyseur étant séparée de ladite seconde chambre (44) de catalyseur, ladite première chambre (42) de catalyseur étant en communication fluidique avec ladite première entrée (41) de catalyseur et ladite seconde chambre (44) de catalyseur étant en communication fluidique avec ladite seconde entrée (43) de catalyseur, ladite première chambre (42) de catalyseur et ladite seconde chambre (44) de catalyseur étant en communication thermique l'une avec l'autre.

2. Moteur à combustion interne à six temps (10) selon la revendication 1, ladite partie de produits de combustion prédéterminée étant dans la plage de 1 à 100 %, de préférence dans la plage de 10 à 70 %, desdits produits de combustion.

3. Moteur à combustion interne à six temps (10) selon la revendication 1 ou 2, ladite première chambre (42) de catalyseur étant séparée de ladite seconde chambre (44) de catalyseur par un élément de séparation (52) constitué d'un premier matériau, et lesdites première et seconde chambres (42, 44) de catalyseur étant enveloppées par un élément d'enveloppement (54) constitué d'un second matériau, ledit premier matériau présentant une conductivité thermique supérieure à celle dudit second matériau.
